# EUROPÄISCHE PATENTANMELDUNG

(11) **EP 3 763 433 A1**
(43) Veröffentlichungstag der Anmeldung: **13.01.2021**
(21) Anmeldenummer: 20187967.3
(22) Anmeldetag: 16.05.2014
(51) Int. Cl.: B01D 46/00, B01D 46/24, B01D 46/52

(54) **LUFTFILTER FÜR DIE INNENRAUMLUFT VON KABINEN VON FAHRZEUGEN, LAND-, BAU- UND ARBEITSMASCHINEN**

(30) Priorität: 17.05.2013 DE 102013008392
(62) Teilanmeldung aus: 14727432.8
(71) Anmelder: Mann+Hummel GmbH, 71636 Ludwigsburg (DE)
(72) Erfinder: WOITOLL, Ina, 74360 Ilsfeld (DE); STINZENDÖRFER, Joachim, 67346 Speyer (DE); GOHLE, Angelika, 67365 Schwegenheim (DE); WINTER, Manfred, 74906 Bad Rappenau (DE); SCOPE, Andreas, 09600 Oberschoena (DE); WEISS, Dieter, 95482 Gefrees (DE)
(74) Vertreter: Nickolaus, Mathias

(57) **Zusammenfassung**

Die Erfindung betrifft ein Innenraumluftfilterelement (10) für eine Fahrerkabine (302) von Land- und Arbeitsmaschinen, insbesondere mit Spritz- oder Sprühvorrichtungen für Pflanzenschutz- oder Düngemittel, umfassend einen Filterkörper (12) mit einem Adsorptionsfilterbereich (50) sowie einem Feinfilterbereich (80) insbesondere zur Abscheidung von Aerosolen, wobei der Filterkörper (12) als Wickelkörper mit wenigstens einer Wickellage ausgebildet ist.

## Beschreibung

### Technisches Gebiet

Die Erfindung betrifft einen Innenraumluftfilter, insbesondere für die einer Fahrerkabine zugeführte Luft in Fahrzeugen, Landmaschinen, Baumaschinen und Arbeitsmaschinen.

### Stand der Technik

Aus der WO 00/33940 A1 ist ein Luftfilter bekannt, welcher eine äußere Lage von Aktivkohle mit einer Lage eines HEPA-Filters kombiniert.

Die Filterwirkung dieses Filters kann jedoch für Anwendungen, bei welchen zum Beispiel hohe Pflanzenschutzmittelkonzentrationen oder (Flüssig)-Düngemittel-Konzentrationen in der Umgebungsluft auftreten, insbesondere beim Umgang mit Sprühgeräten für diese Stoffe, nicht ausreichend sein. Dies kann insbesondere beim Ausbringen von flüssigen Pestiziden und/oder Fungiziden mit land- oder forstwirtschaftlichen Traktoren und selbstfahrenden Pflanzenschutzgeräten für Fahrer oder Bedienpersonal nachteilig sein.

Es ist daher Aufgabe dieser Erfindung, einen Innenraumluftfilter bereitzustellen, der eine bessere Filterwirkung in Bezug auf die im Betrieb von Landmaschinen auftretenden Stäube, Aerosole und Dämpfe, insbesondere von Pestiziden und Fungiziden, aufweist.

### Offenbarung der Erfindung

Diese Aufgabe wird gelöst durch ein Innenraumluftfilterelement für eine Fahrerkabine von Land- und Arbeitsmaschinen, insbesondere mit Spritz- oder Sprühvorrichtungen für Pflanzenschutz- oder Düngemittel, umfassend einen Filterkörper mit wenigstens einem Adsorptionsfilterbereich insbesondere zur Abscheidung von Gasen sowie wenigstens einem Feinfilterbereich insbesondere zur Abscheidung von Aerosolen, wobei zumindest der Adsorptionsfilterbereich des Filterkörpers als Wickelkörper mit wenigstens einer Wickellage ausgebildet ist und einen zentralen Strömungsraum umschließt. Weiter bevorzugt kann auch der Feinfilterbereich als Wickelkörper ausgebildet sein oder als Lage in den Wickel des Adsorptionsfilterkörpers integriert sein.

Das Innenraumluftfilterelement ist bevorzugt ausschließlich radial durchströmbar. Dies bedeutet, dass das zu reinigende Fluid entweder von dem zentralen Strömungsraum durch den zylindrischen Filterkörper nach außen strömen kann oder in entgegengesetzter Richtung von der insbesondere zylindrischen Außenfläche des Innenraumfilterelements durch den zylindrischen Filterkörper nach innen in den zentralen Strömungsraum.

Als Adsorbens im Adsorptionsfilterbereich kann ein einzelnes Adsorbens vorgesehen sein oder eine Mischung von verschiedenen Adsorbentien oder auch eine Mischung mit anderen Materialien wie etwa mindestens einem Absorbens. Das Adsorbens kann insbesondere Aktivkohle sein und/oder wenigstens ein Material aus der Gruppe Zeolithe, Silicagele, Metalloxide, Molekularsiebe, Schichtsilikate, Nanoclays. Ebenso können zusätzlich ein oder mehrere lonentauscher vorgesehen sein.

Weitere Vorteile bei Einsatz unterschiedlicher Adsorbentien sind in der individuellen Anpassung der Adsorptionsperformance an die Anforderungen für bestimmte Gase zu sehen. Bei Einsatz von Adsorbentien, die Schadgase chemisch binden, kann eine spätere Desorption der Schadgase verhindert werden. Durch die räumliche Anordnung der Materialien können weitere vorteilhafte Effekte ausgenutzt werden. Z. B. kann die erste Lage als Schutzschicht fungieren, indem ein spezialisiertes Material mit einer hohen Affinität und Kapazität für ein Gas A eingesetzt wird. Somit werden die dahinter liegenden Lagen (z. B. Aktivkohle mit guter Breitenwirkung) vor Gas A geschützt, was die Adsorptionsleistung für ein (dem Gas A ähnliches) Gas B verbessert, da keine Poren durch das Gas A blockiert werden und damit nicht zwei Molekültypen um gleich große Poren in der Aktivkohle konkurrieren müssen.

Vorteilhaft sind gewickelte Lagen (Wickellagen) ohne separate Rillen oder Abstandshalter ausgebildet, wie sie etwa bei geschlossenen plissierten Filterkörpern oder bei Verwendung von geprägten Filtermedien auftreten, und ohne definierte Durchströmungskanäle ausgebildet, was die Herstellung und die Handhabung des Filterelements erleichtert. Bei dem Filterelement ist kein wechselseitiger Verschluss von Durchströmungskanälen erforderlich, was die Herstellung erleichtert. Konventionelle Filterelemente mit Filterkörpern aus plissierten Filtermedien bieten aufgrund der hohen Strömungsgeschwindigkeiten nicht die erforderliche Kontaktzeit, die für eine zuverlässige Adsorption bzw. Absorption von Schadstoffen im Filter sorgt, was kritisch für die Funktionalität eines Filters zur Gasreinigung bzw. die Filtrationseffizienz und/oder Adsorptionseffizienz ist. Dies gilt besonders für Filterelemente mit hohem Durchfluss des zu filternden Mediums. Durch die Ausgestaltung des Filterkörpers als Wickelkörper mit einer oder mehreren Wickellagen bietet das Filterelement eine ausreichend hohe Kontaktzeit des zu filternden Mediums mit dem Adsorbens, welches das zu filternde Medium dabei reinigen kann.

Das erfindungsgemäße Filterelement kann insbesondere für die Fahrerkabine von Landmaschinen und Arbeitsmaschinen, insbesondere mit Spritzvorrichtungen oder Sprühvorrichtungen für Pflanzenschutzmittel oder Düngemittel verwendet werden. Durch die Kombination von Adsorptionsfilterbereich und Feinfilterbereich können zuverlässig auch in den genannten, stark belasteten Umgebungen stark verbesserte Luftqualitäten im Innenraum der Fahrerkabine erzielt werden. Im Adsorptionsfilterbereich werden insbesondere gesundheitsschädliche und/oder unangenehm riechende Gase gebunden, im stromauf oder stromab des Adsorptionsfilterbereichs angeordneten Feinfilterbereich werden feine Stäube, Dämpfe und Aerosole aus der Atemluft entfernt. Eine Anordnung des Feinfilterbereichs kann bevorzugt stromauf des Adsorptionsfilterbereichs vorgesehen sein.

Gemäß einer günstigen Ausgestaltung kann für den Feinfilterbereich ein ungefaltetes oder zickzackförmig gefaltetes Filtermedium mit Glasfasern, vorgesehen sein, insbesondere ein Glasfaserfiltermedium, welches bevorzugt mit einer oder zwei Deckschichten aus einem Spinnvlies versehen ist. Das Filtermedium eignet sich zur effizienten Abscheidung von Aerosolen.

Gemäß einer günstigen Ausgestaltung kann ein anströmseitiger Vorfilterbereich insbesondere zur Abscheidung von Stäuben vorgesehen sein. Eine Kombination aus Vorfilterbereich, Feinfilterbereich und Adsorptionsfilterbereich ergibt ein hocheffizientes Filterelement mit hohem Sicherheitsstandard.

Gemäß einer günstigen Ausgestaltung kann für den Vorfilterbereich ein ungefaltetes oder zickzackförmig gefaltetes Filtermedium aus Zellulose, Kunststoffschaum oder Vlies, z. B. Kunststoffvlies, vorgesehen sein. Das Filtermedium kann insbesondere auch eine ein- oder mehrlagige Kombination aus Lagen derartiger Filtermedien umfassen. Das Filtermedium eignet sich zur effizienten Abscheidung von Partikeln.

Gemäß einer weiteren günstigen Ausgestaltung kann auch der Vorfilterbereich als Wickelkörper ausgebildet sein oder als Lage in den Wickel des Adsorptionsfilterkörpers integriert sein

Gemäß einer günstigen Ausgestaltung kann der Adsorptionsfilterbereich aus einem Halbzeug aus wenigstens einer Trägerlage und wenigstens einer fixierten Adsorberlage mit wenigstens einem Adsorbens gebildet sein. Ein Fixieren oder Immobilisieren des Adsorbens in der Adsorberlage verhindert ein Mitreißen von Partikeln aus dem Adsorptionsfilterbereich.

Gemäß einer günstigen Ausgestaltung kann der Wickelkörper auf ein Rohrelement gewickelt sein, das als Stützkörper im Wickelkörper verbleibt. Hierdurch kann der Herstellprozess des Filterelements vereinfacht werden. Mit Vorteil kann das Rohrelement selbst ein Vorfilterbereich und/oder Feinfilterbereich sein. Alternativ kann der Wickelkörper auch auf einem Dorn gewickelt werden, der nach dem Wickeln entfernt wird.

Gemäß einer günstigen Ausgestaltung kann das Filtermedium des Vorfilterbereichs und/oder des Feinfilterbereichs in den Wickelkörper integriert sein, insbesondere als Trägerlage oder zusätzliche Lage zur Trägerlage. Hierdurch kann die Filtereffizienz erhöht werden, ferner ist auf diese Weise auch ein integrierter Innenraumluftfilteraufbau einfach und kostengünstig herstellbar. Da auf diese Weise eine Mehrzahl von aufeinanderfolgenden Filtermedienlagen für Vorfilterbereich und/oder Feinfilterbereich dargestellt werden kann, wird ein mehrfacher Durchtritt des zu filternden Mediums, etwa Luft, durch das jeweilige Filtermedium des Vorfilterbereichs und/oder Feinfilterbereichs ermöglicht. Dadurch kann die Filtrationseffizienz verbessert werden. Insbesondere kann die Durchströmungsrichtung des Filterelement von innen nach außen, bezogen auf den Wickelkörper, oder von außen nach innen gerichtet sein.

Neben der Wandstärke des Wickelkörpers, d. h. des Filterelements, die sich aus Anzahl der Wickellagen im Filterelement und Dicke pro Wickellage ergibt, ist auch die Form des Wickelfilters variabel. Neben der üblichen kreisrunden Form sind auch andere Querschnitte, wie elliptische, dreieckige, polygone, Formen möglich. Diese Formen lassen sich auf einfache Weise durch Aufwickeln einer flachen Trägerlage auf einen geeigneten Innenkern herstellen. Damit ist eine optimale Bauraumausnutzung möglich.

Das Design des Innenraumluftfilterelements ist unkompliziert und robust und erlaubt lange Standzeiten im Einsatz. Weiterhin können Filtereigenschaften z. B. durch gezielte Verteilung von weiteren Komponenten in der wenigstens einen Wickellage in radialer und/oder auch axialer Richtung des Filterelements vorgegeben werden.

Günstigerweise kann das Innenraumluftfilterelement eine umlaufende Dichtung zur Trennung der Rohseite von der Reinseite beim Einbau in ein Filtergehäuse aufweisen.

In einer Ausführungsform kann zusätzlich eine anströmseitige Vorfilterlage, insbesondere zur Abscheidung von Stäuben, vorgesehen sein. Diese ist dem Adsorptionsfilterbereich mit einer Adsorberwickellage oder mehreren Adsorberwickellagen und der Feinfilterlage vorgeschaltet und auf der Anströmseite des Innenraumluftfilterelements angeordnet. Dadurch kann auch in stark staubbelasteten Umgebungen eine zuverlässige Funktion des Adsorptionsfilterbereichs und der Feinfilterlage gesichert und die Staubbeladung der Ansaugluft reduziert werden.

Im Falle von Aktivkohle als Adsorbens kann beispielsweise Aktivkohle aus Holz oder Steinkohle gewonnen, polymer basiert, teerbasiert, oder Kokosnussschalen-basiert sein. In einer günstigen Ausführungsform werden als Grundstoff für die Aktivkohle lonenaustauscherkügelchen verwendet, die auf Polymerbasis, beispielsweise aus Kunstharzen, insbesondere aus mit Divinylbenzen vernetztem Polystyren hergestellt sind.

In einer Ausführungsform kann als Adsorbens ein hydrophobes Adsorbens, insbesondere hydrophobe Aktivkohle, verwendet werden. Als hydrophobe Adsorbentien werden insbesondere solche verstanden, die eine vergleichsweise geringe Wasseraufnahmekapazität aufweisen. Bevorzugt wird beispielsweise ein Adsorbens verwendet, z. B. eine Aktivkohle, welche bei einer relativen Luftfeuchte von 50 % eine Wasseraufnahme von <10 Massenprozent, insbesondere bezogen auf den Adsorptionsast der Isotherme aufweist. Besonders bevorzugt beträgt diese Wasseraufnahme <5 Massenprozent.

In einer Ausführungsform kann das Adsorbens eine BET-Oberfläche von größer 600 m²/g aufweisen, bevorzugt größer 800 m²/g (bevorzugt gemessen nach DIN ISO 9277:2003-05). Dadurch kann auf kleinem Bauraum eine ausreichende Adsorption sichergestellt werden.

In einer Ausführungsform kann das Adsorbens in schüttfähiger oder rieselfähiger Form, beispielsweise in Form von körner- oder kugelartiger oder anderweitig geformter Partikel verwendet werden. Die Adsorbenspartikel weisen bevorzugt Partikelgrößen (mittlere Durchmesser) zwischen 0,1 und 1 mm, bevorzugt 0,2 bis 0,7 mm auf und können beispielsweise in der Form von Stäbchen, Granulat oder Kugeln vorliegen, z. B. in Form von Granulat-Aktivkohle oder Kugel-Aktivkohle.

Als Adsorbens wird definiert ein porenreicher, bevorzugt fester, bevorzugt nicht faservliesartiger und bevorzugt schüttbarer Stoff, der aufgrund seiner inneren Oberfläche zur selektiven Anreicherung von bestimmten Stoffen an seiner Grenzfläche aus gasförmigen oder flüssigen Mischungen, insbesondere aus mit gasförmigen oder flüssigen Stoffen beladener Luft, befähigt ist. Beispiele hierfür sind Aktivkohle, Aluminiumoxid, Kieselgel, Siliziumoxid, Zeolithen, Silicagel oder synthetische Adsorberharze.

In einer Ausführungsform kann als Vorfilterbereich ein ungefaltetes oder zickzackförmig gefaltetes Filtermedium verwendet werden. Dies kann beispielsweise aus Zellulose, Kunststoffschaum oder Vlies bestehen oder eine ein- oder mehrlagige Kombination aus Lagen derartiger Filtermedien umfassen.

Eine Kunststoffschaum-Filtermedienlage für den Vorfilterbereich kann beispielsweise aus einem retikulierten Schaum, insbesondere Polyurethanschaum, beispielsweise auf Polyether- oder Polyesterbasis bestehen oder eine oder mehrere Lagen dieses Schaums umfassen. Raumgewichte derartiger Schäume können im Bereich von 20 - 70 kg pro m³ betragen.

Als Zellulose-Filtermedium für den Vorfilterbereich kann beispielsweise ein Zellulose-Filtermedium mit Epoxidimprägnierung zum Einsatz kommen. Bevorzugt weist das Zellulose-Filtermedium ein Flächengewicht von 80 - 120 g/m² auf. In einer bevorzugten Ausführungsform weist das Filtermedium eine maximale Porengröße im Bereich von 30 - 40 µm und/oder eine Luftdurchlässigkeit von ca. 100 - 400 l/m²s, bevorzugt zwischen 200 und 300 l/m²s auf, jeweils gemessen bei einer Druckdifferenz von 200 Pa (gemessen hier und im Folgenden bevorzugt nach DIN EN ISO 9237). Auf diese Weise können die nachfolgenden Lagen vor Staubablagerung geschützt und damit deren Funktion gesichert werden. In einer Ausführung beträgt der Imprägniergehalt, d. h. der Gewichtsanteil des Imprägniermittels am Flächengewicht des Filtermediums zwischen 15 und 30 %.

Als Vlies-Filtermedium für den Vorfilterbereich kann bevorzugt eine Kombination einer Spinnvlieslage und einer Meltblown-Lage (Vlies aus schmelzgeblasenen Kunststofffasern) verwendet werden. Beide Lagen können jeweils aus Polyamid (PA), Polyester (PES), Polycarbonat (PC) oder Polypropylen (PP) hergestellt sein. Das Vlies-Filtermedium weist bevorzugt ein Flächengewicht zwischen 60 und 140 g/m², bevorzugt zwischen 80 und 120 g/m² und/oder eine Dicke im Bereich von 0,5 - 1 mm, besonders bevorzugt von 0,5 - 0,8 mm. Weiter bevorzugt liegt die Luftdurchlässigkeit im Bereich von 1000 - 2000 l/m²s, besonders bevorzugt zwischen 1200 und 1800 l/m²s bei einer Druckdifferenz von 200 Pa.

In einer Ausführungsform weist der Vorfilterbereich insbesondere nach ISO 5011 einen Abscheidegrad von 99 % für Prüfstaub PTI fein insbesondere nach ISO 14269-4 auf.

Der Vorfilterbereich weist in einer günstigen Ausführungsform eine Flächenmasse von 75 - 125 g/m² auf. Bevorzugt weist das Filtermedium des Vorfilterbereichs eine Luftdurchlässigkeit von 100 - 200 l/m²s bei einer Druckdifferenz von 200 Pa auf.

Durch die Verwendung des Vorfilterbereichs kann erreicht werden, dass der Adsorptionsfilterbereich und der Feinfilterbereich vor zu großer Staubbeladung geschützt werden. Dadurch wird deren Funktion (Gasabscheidung des Adsorptionsfilterbereichs und Aerosolabscheidung des Feinfilterbereichs) auch bei sehr staubbeladener Ansaugluft in möglichst geringem Maße beeinträchtigt.

Für den Adsorptionsfilterbereich kann beispielsweise ein offenporiger Schaum mit rieselfähigem Adsorbens, z. B. rieselfähiger Aktivkohle, vorgesehen sein. Dabei kommen beispielsweise retikulierte Schäume z. B. aus Kunststoffen wie Polyurethan, Polyurethan-Ether oder Polyurethan-Ester zum Einsatz. Bevorzugt betragen die Porengrößen des Schaumes zwischen 20 und 50 ppi (ppi = pores per inch) oder zwischen 0,5 und 2 Poren pro Millimeter. Gemessen wird in einem vergleichenden optischen Verfahren, wobei unter dem Mikroskop eine vollständig ausgebildete Pore als "Standardpore" definiert und über einen Streckenabschnitt die dort auftretenden Poren mit dieser verglichen und ausgezählt werden. Poren, die im Vergleich zur Standardpore nicht vollständig ausgebildet sind, werden anteilig gezählt. In diesem Schaum sind bevorzugt Adsorbenspartikel eingebracht und vorzugsweise fixiert. Die Adsorbenspartikel sind dabei vorzugsweise mittels eines Klebstoffes, beispielsweise mittels eines Zweikomponentenklebstoffs auf Polyurethanbasis, in dem Schaum fixiert. Dies kann beispielsweise dadurch erreicht werden, dass der Schaum zuerst mit einem Klebstoff getränkt wird und anschließend, bevor der Klebstoff trocknet oder aushärtet, Adsorbenspartikel insbesondere unter Rütteln eingerieselt werden. Hierbei kann ein Zweikomponentenklebstoff, ein Schmelzklebstoff oder ein wässriger Klebstoff zum Einsatz kommen.

In einer Ausführungsform ist für ein Halbzeug, aus dem der Adsorptionsfilterbereich gewickelt wird, eine Lage einer fixierten (immobilisierten) Schüttung mit einem Adsorbens oder mit einer Mischung aus mehreren Adsorbentien oder mit einer Mischung aus wenigstens einem Adsorbens und wenigstens einem Absorbens vorgesehen. Das Halbzeug kann in einem einlagigen oder mehrlagigen Aufbau realisiert werden. Als fixierte (immobilisierte) Schüttung wird eine Anordnung bezeichnet, in welcher eine Trägerlage vorgesehen ist und auf dieser eine Schüttlage von z. B. Adsorbenspartikeln fixiert ist. Als Trägerlage kann beispielsweise ein Kunststoffstreckgitter oder eine Lage eines flächigen Materials, zum Beispiel eines Partikelfiltermediums verwendet werden. In einer günstigen Ausführungsform kommt als Trägerlage ein Vlies aus spinn-gebundenen oder schmelzgeblasenen Polyesterfasern, beispielsweise PET-Fasern (Polyethylenterephthalat) oder PBT-Fasern (Polybutylenterephtalat) verwendet. Dies kann ein Flächengewicht von 25 - 120 g/m², bevorzugt 50 - 100 g/m², besonders bevorzugt 65 - 85 g/m² und eine Luftdurchlässigkeit >3000 l/m²s, bevorzugt >5000 l/m²s bei einer Druckdifferenz von 200 Pa aufweisen. Gemessen wird die Luftdurchlässigkeit insbesondere nach ISO 9347. Die Adsorbenspartikel werden beispielsweise als Schüttung auf die Trägerlage aufgebracht und bevorzugt mittels eines feinen Klebstoffauftrags auf der Trägerlage fixiert. Dies erfolgt beispielsweise in Form einer Vielzahl von auf der Trägerlage aufgebrachter Klebstoffpunkte oder mittels eines Netzes aus Klebstofffäden, die zwischen Trägerlage und Schüttlage und/oder zwischen die Schüttlage während der Schüttung und/oder auf die Schüttlage aufgebracht ist. Die Schüttlage umfasst bevorzugt eine Auflage von 100 - 1200 g/m² Adsorbenspartikel, insbesondere Aktivkohle, auf der Trägerlage. Bevorzugt kommen zwischen 800 und 1000 g/m² zum Einsatz. Die Lage einer fixierten Schüttung mit Trägerlage und Schüttlage weist bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 2 bis 6 mm auf.

Auf diese Weise wird eine stabile, gut zu verarbeitende und leistungsfähige Lage einer fixierten Schüttung bereitgestellt, die maschinell auch zu mehrlagigen Halbzeugen zusammengefasst und zu einem Wickelkörper aufgewickelt werden kann.

In einer Ausführungsform wird für das Halbzeug, aus dem der Adsorptionsfilterbereich gewickelt wird, ein ungefalteter Schichtaufbau aus einer Trägerlage, einer Deckschicht und dazwischen eingebrachtem, rieselfähigem Adsorbens verwendet. Dadurch wird ein Halbzeug mit jeweils einer Trägerlage und Decklage und einer dazwischen angeordneten Adsorberlage gebildet. Derartige Halbzeuge können wiederum zur Erhöhung der Filtrationsleistung durch Aufwickeln der beschichteten Trägerlage mehrfach übereinander angeordnet werden, so dass die Wandstärke des Wickels beispielsweise zwischen zwei und 20 Halbzeuge, bevorzugt zwischen 5 und 15 Halbzeuge, entspricht.

Die Decklage kann direkt auf der Adsorberlage angeordnet sein, und beispielsweise ein Kunststoffgitter oder eine Lage eines flächigen Materials, zum Beispiel eines Partikelfiltermediums umfassen oder aus diesem bestehen. In einer bevorzugten Ausführungsform kommt als Decklage ein Vlies aus spinn-gebundenen oder schmelzgeblasenen Polyesterfasern zum Einsatz Dies kann ein Flächengewicht von 25 - 120 g/m², bevorzugt 50 - 100 g/m², besonders bevorzugt 65 - 85 g/m² und eine Luftdurchlässigkeit >3000 l/m²s, bevorzugt >5000 l/m²s aufweisen.

In einer Ausführungsform weist die Adsorberlage einen Schichtaufbau aus mehreren fixierten (immobilisierten) Schüttungen auf. So kann beispielsweise eine erste Lage einer fixierten Schüttung mit der Seite, auf der das Adsorbens angeordnet ist (Adsorberseite), auf die Adsorberseite einer zweiten Lage fixierter Schüttung gelegt und mit dieser beispielsweise durch Verkleben verbunden werden. Dadurch wird ein Halbzeug mit zwei Trägerlagen oder Decklagen und dazwischen angeordneter Adsorberlage gebildet. Derartige Halbzeuge können wiederum zur Erhöhung der Filtrationsleistung durch Aufwickeln des Halbzeugs mehrfach übereinander angeordnet werden, was eine vorteilhafte Wandstärke des Wickels entsprechend einer Dicke von beispielsweise zwischen zwei und 10 Halbzeuge, bevorzugt zwischen 3 und 7 Halbzeuge, ergibt. Alternativ oder in Kombination sind auch Anordnungen denkbar, bei welchen jeweils die Trägerlage einer Lage einer fixierten Schüttung auf die Adsorberlage einer anderen fixierten Schüttung aufgelegt ist. Diese Anordnung kann dann durch eine gewendete Lage mit fixierter Schüttung oder eine Decklage abgeschlossen werden. Beispielsweise können zwischen 4 und 20 Lagen einer fixierten Schüttung aufeinander angeordnet sein.

Bevorzugt können mittels der dargestellten Varianten mehrere Adsorptionsfilterlagen in Schichtaufbau umfassend eine Trägerlage, eine Decklage und dazwischen wenigstens ein eingebrachtes, rieselfähiges Adsorbens übereinander eine aufgewickelte Gesamtadsorptionsfilterlage bilden. Es werden dabei insbesondere zwischen 2 und 30, bevorzugt zwischen 5 und 15 Lagen von Halbzeug oder von fixierter Schüttung zur Bildung des Gesamtadsorptionsfilterbereichs durch Aufwickeln aufeinander angeordnet und der Wickelkörper optional stirnseitig mittels eines Verbindungsmittels abgedichtet. Als Verbindungsmittel kann zum Beispiel ein angeklebtes, angespritztes oder angeschweißtes Kunststoffteil oder eine mittels einer Gießform an die Stirnseiten angegossene Vergussmasse, insbesondere aus Polyurethan, verwendet werden. Ferner ist als Verbindungsmittel auch eine unter Wärmeeinwirkung aufquellende Dichtmasse verwendbar, beispielsweise eine in Folienform vorliegende Masse, die Nitrilkautschuk und Phenolharz enthält. Diese kann an den Wickelkörper angelegt und erwärmt werden, wodurch sich die Masse mit dem Wickelkörper beim Aufquellen verbindet und anschließend aushärtet. Das Verbindungsmittel kann bevorzugt als Endscheibe ausgebildet sein.

In einer Ausführungsform weist die Adsorberlage zwei Bereiche mit unterschiedlicher Adsorbensdichte auf. Dabei ist bevorzugt ein Bereich mit höherer Adsorbensdichte auf der Abströmseite und ein Bereich mit geringerer Adsorbensdichte auf der Anströmseite angeordnet. Dies kann beispielsweise dadurch erreicht werden, dass zwei Lagen von verschiedenen mit Adsorbenspartikeln gefüllten Schäumen aufeinander gelegt sind, wobei die abströmseitige Lage einen höheren Füllgrad von Adsorbens aufweist als die anströmseitige Lage. Alternativ kann wie oben in verschiedenen Varianten beschrieben ein Schichtaufbau von Lagen mit fixierten Schüttungen von Adsobenspartikeln eingesetzt werden, bei welchem eine oder mehrere abströmseitige Lagen oder Schichten, die insbesondere den Schichtaufbau zur Abströmseite hin abschließen, eine höhere Adsorbensdichte aufweisen. Dies kann beispielsweise dadurch erreicht werden, dass bei gleichen Materialien für Trägerlagen, Adsorberlagen und Decklagen die abströmseitigen Lagen insbesondere vor, während oder nach dem Erhärten des Klebstoffes derart kalandriert werden, dass die Schichtdicke reduziert und damit die Adsorbensdichte erhöht wird. Es kann jedoch auch für die Lage(n) mit höherer Adsorbensdichte ein Granulat, z. B. ein Aktivkohlegranulat, verwendet werden, welches eine höhere Schüttdichte aufweist als das für die Lagen mit geringerer Dichte verwendete. Dies kann entweder durch Aktivkohlen mit unterschiedlicher spezifischer Dichte oder durch unterschiedliche Geometrien der Adsorbenspartikel realisiert werden. Dadurch wird insbesondere eine Sperrlage dargestellt, welche zuverlässig die Abscheidung von Restkonzentrationen von schädlichen Gasen ermöglichen kann. Dadurch kann eine zusätzliche Sicherheit für den Anwender bereitgestellt werden.

In einer bevorzugten Ausführungsform weist die Adsorberlage einen abströmseitigen Bereich umfassend eine oder mehrere insbesondere kalandrierte Lagen von fixierter Schüttung auf. Diese Lage(n) weisen bevorzugt eine Auflage von Aktivkohle von 100 - 1200 g/m² Adsorbenspartikel auf der Trägerlage auf. Bevorzugt kommen zwischen 800 und 1000 g/m² zum Einsatz. Die Lage einer fixierten Schüttung mit Trägerlage und Adsorberlage weist hierfür bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 1 bis 3 mm auf. Besonders bevorzugt weisen diese Lagen oder diese Lage im abströmseitigen Bereich mit höherer Adsorbensdichte im Wesentlichen die gleiche Auflage von Adsorbenspartikel in Bezug auf das Flächengewicht und/oder die Art der Adsorbenspartikel auf wie die vorhergehenden, anströmseitigen Lagen mit geringerer Adsorbensdichte. Weiter bevorzugt weist diese Lage oder diese Lagen eine deutlich geringere Lagendicke auf als die vorhergehenden, anströmseitigen Lagen mit geringerer Adsorbensdichte. Die Lagendicke kann beispielsweise kleiner 2/3 der Dicke der vorhergehenden, anströmseitigen Lagen mit geringerer Adsorbensdichte betragen, bevorzugt zwischen 40 % und 60 % der Dicke der vorhergehenden, anströmseitigen Lagen. Dazu werden beispielsweise die Lage oder die Lagen mit höherer Adsorbensdichte durch einen Kalandrierschritt oder ein ähnliches Verfahren derart verdichtet, dass gegenüber der unbearbeiteten Lage eine derartige Dickenreduktion erreicht wird. Auf diese Weise können die verschiedenen Bereiche mit unterschiedlicher Adsorbensdichte aus den gleichen Grundmaterialien hergestellt werden, wobei zur Erzeugung der Lagen mit höherer Adsorbensdichte nur ein zusätzlicher Kalandrierschritt erforderlich ist.

In einer günstigen Ausführungsform wird für die Lage oder die Lagen mit höherer Adsorbensdichte eine Schüttung aus Adsobenspartikeln verwendet, die im Vergleich zu den vorhergehenden, anströmseitigen Lagen mit geringerer Adsorbensdichte eine höhere Schüttdichte aufweist. Bevorzugt ist dabei die Schüttdichte im Vergleich zu den anströmseitigen Lagen mit geringerer Adsorbensdichte um 50 %, besonders bevorzugt um 100 % höher.

In einer günstigen Ausführungsform wird für die Lage oder die Lagen mit höherer Adsorbensdichte eine Schüttung aus Adsorbenspartikeln verwendet, die im Vergleich zu den vorhergehenden, anströmseitigen Lagen mit geringerer Adsorbensdichte einen geringeren mittleren Partikeldurchmesser, insbesondere einen um mindestens 50 % geringeren mittleren Partikeldurchmesser, bevorzugt einen mindestens 65 % geringeren mittleren Partikeldurchmesser aufweist.

In einer Ausführungsform weisen die anströmseitigen Lagen mit geringerer Adsorbensdichte Adsorbenspartikel mit einem Partikeldurchmesser im Bereich von 0,7 bis 1,2 mm auf.

In einer Ausführungsform weisen die Lage oder die Lagen mit höherer Adsorbensdichte eine Schüttung aus Adsorbenspartikeln mit Partikeldurchmesser im Bereich von 0,3 bis 0,7 mm auf.

Mit den beschriebenen Ausführungsformen der Adsorberlage wird insbesondere eine gleichmäßige Verteilung des wenigstens einen Adsorbens im gewickelten Adsorptionsfilterbereich erreicht, die auch während des Betriebs beispielsweise unter Vibrationsbelastung gewährleistet ist. Auf diese Weise kann zur Bereitstellung eines zuverlässigen Filterelements beigetragen werden.

Mit einem erfindungsgemäßen Filtermedium für einen Adsorptionsfilterbereich kann insbesondere ein Innenraumluftfilterelement mit einem Adsorptionsfilterbereich bereitgestellt werden, der insbesondere gut verarbeitbar ist. Insbesondere kann ein Innenraumluftfilterelement bereitgestellt werden, das abströmseitig eine Prüfgas-Konzentration unter 10 µg/g nach der Zyklohexan-Methode entsprechend EN 12941:1998 bei einer Prüfdauer von 70 min gemessen nach EN 15695-2:2009 erreicht.

In einer Ausführungsform wird als Feinfilterbereich ein ungefaltetes oder zickzackförmig gefaltetes Filtermedium mit Glasfasern in einer Glasfaserlage verwendet. Hierbei kann beispielsweise ein Glasfaservlies oder Glasfaserpapier verwendet werden. Dieses weist bevorzugt eine einseitig oder beidseitig kaschierte Decklage aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Decklagen zur Verbesserung der mechanischen Festigkeit des Feinfilterbereichs dienen.

In einer Ausführungsform des Feinfilterbereichs weisen die Glasfasern einen Faserdurchmesser im Bereich von 800 nm bis 5 µm auf. Bevorzugt weisen 90 % der Fasern einen Faserdurchmesser innerhalb dieses Bereichs auf. Bevorzugt liegen Fasern mit Faserdurchmessern im Wesentlichen im ganzen Faserdurchmesserbereich vor. Bevorzugt liegt der mittlere Faserdurchmesser innerhalb des genannten Bereiches. Die Faserdurchmesser können beispielsweise nach den in DE 10 2009 043 273 A1 oder US 2011/0235867 A1 beschriebenen Verfahren gemessen sein. Bevorzugt weist das Filtermedium des Feinfilterbereichs eine Flächenmasse zwischen 60 und 100 g/m² auf, besonders bevorzugt zwischen 75 und 90 g/m². Eine Glasfaserlage weist bevorzugt eine Dicke von 0,2 - 1 mm, besonders bevorzugt von 0,3 - 0,6 mm auf. Besonders bevorzugt wird eine Glasfaserlage verwendet, welche bei einer Anströmgeschwindigkeit von 7,5 cm/s einen Widerstand im Bereich von 300 - 600 Pa, bevorzugt zwischen 400 und 500 Pa erzeugt.

In einer Ausführungsform sind die Spinnvliese der Decklage(n) insbesondere aus einem Polyester oder Polypropylen oder Polyamid als Werkstoff gebildet.

In einer Ausführungsform weisen die Spinnvliese der Decklage(n) Flächenmaßen im Bereich von 10 und 250 g/m², bevorzugt 20 bis 60 g/m² und besonders bevorzugt 30 - 34 g/m²auf. Bevorzugte Dicken für die Decklagen liegen im Bereich von 0,1 bis 0,3 mm.

In einer Ausführungsform wird das Spinnvlies der Decklage(n) aus Endlosfasern gebildet, die mittels temperierter Luft und/oder Galetten verstreckt und auf ein Transportband wirr abgelegt werden. Nachfolgen kann optional ein Kalanderprozess erfolgen zum Erzeugen eines Faserverbunds und/oder Beeinflussung der Vliesoberflächen.

Anstatt von Glasfasern können für den Feinfilterbereich auch Kunststofffasern verwendet werden. In einem Ausführungsbeispiel wird ein solches synthetisches HEPA-Medium an Stelle der beschriebenen Glasfasermedien verwendet. Als Werkstoff kann dabei beispielsweise Polyester oder Polypropylen oder Polyamid verwendet werden. Dabei können Faserlagen bevorzugt in Vliesform ausgebildet sein und beispielsweise im Elektrospinningverfahren, im Schmelzblasverfahren oder auf sonstige Weise hergestellt sein. Aufgrund der Stoffeigenschaften synthetischer Filtermedien kann vorteilhaft auf Decklagen und Schutzlagen verzichtet werden. Bevorzugt wird eine Lage aus schmelzgeblasenem Vlies aus Polyester mit einer Flächenmasse von beispielsweise 80 - 120 g/m² und einer Dicke von beispielsweise ca. 0,4 bis 0,8 mm verwendet. Diese ist weiter bevorzugt auf eine Trägerlage aufgebracht. Als Trägerlage kommt beispielsweise ein Kunststoff-Stützgitter oder eine Spinnvlies-Lage in Betracht. Die weiteren Eigenschaften können denen der beschriebenen Feinfilterlagen mit Glasfasern entsprechen.

In einer Ausführungsform sind Vorfilterbereich und Feinfilterbereich in einem Filterbalg mit insbesondere unmittelbar aufeinanderliegenden einer oder mehreren Lagen eines Vorfiltermediums und einer oder mehreren Lagen eines Feinfiltermediums integriert.

In einer Ausführungsform ist eine Decklage nur einseitig auf eine Glasfaserlage kaschiert, auf die andere Seite wird direkt das Vorfiltermedium auflaminiert. Diese Lagenkombination kann entweder flach in das Innenraumluftfilterelement integriert oder als gesamte Lagenkombination zickzackförmig gefaltet sein und einen Faltenbalg bilden. Auf diese Weise kann ein Innenraumluftfilterelement mit mehreren Filterstufen mit geringem Montageaufwand und auf kleinem Bauraum bereitgestellt werden.

Decklagen und/oder Vorfilterlagen oder Vorfilterbereich können auf unterschiedliche Weise auf die Glasfaserlage aufgebracht sein. Hierbei kommen beispielsweise gesprühte Klebstoffe, beispielsweise in wässriger Suspension zum Beispiel auf PU-Basis zum Einsatz. Alternativ können aufgesprühte, in Pulverauftragsverfahren oder aufgetragene Schmelzklebstoffe, beispielsweise in Form von Klebevliesen oder Klebegittern zwischen den Lagen zum Einsatz kommen, welche beim Kalandrieren in einem Fixierschritt aufschmelzen und anschließend aushärten und damit eine dauerhafte Verbindung herstellen. Damit kann insbesondere eine sichere Verbindung zwischen Glasfaserlage und Decklagen hergestellt werden, die eine Faltung des Filtermediums erlaubt.

Mit einem erfindungsgemäßen Filtermedium für einen Feinfilterbereich kann insbesondere ein Innenraumluftfilterelement mit einem Feinfilterbereich bereitgestellt werden, der insbesondere gut zu einem Faltenbalg verarbeitbar ist. Insbesondere kann ein Innenraumluftfilterelement bereitgestellt werden, das eine Aerosol-Durchdringung von ≤ 0,05 % gemessen nach EN 15695-2:2009 erreicht.

In dem erfindungsgemäßen Filterelement können im Halbzeug, mit dem der Wickel gebildet wird, Vorfilterbereich und/oder Adsorptionsfilterbereich und/oder Feinfilterbereich jeweils ein separates Teilfilterelement bilden oder vollständig oder teilweise in Schichten aufeinanderfolgend gewickelt miteinander verbunden sein.

In einer Ausführungsform kann das Halbzeug, welches für den Filterkörper des Innenraumluftfilterelements eingesetzt wird, aufeinanderfolgend mindestens zwei der drei Teilfilterelemente Vorfilterbereich, Adsorptionsfilterbereich und Feinfilterbereich umfassen. Diese können jeweils an den Kanten eine umlaufende Dichtung aufweisen, welche mit dem jeweiligen Teilfilterbereich dichtend verbunden ist.

In einer Ausführungsform kann die umlaufende Dichtung durch ein umlaufendes Dichtprofil aus einem Polymer, insbesondere aus einem angeschäumten, insbesondere geschlossenporigen Schaum zum Beispiel aus Polyurethanschaum gebildet sein. Ist auch eine Endscheibe aus einem derartigen Material gebildet, kann die Dichtung mit der Endscheibe einstückig ausgebildet sein. Alternativ kann eine spritzgegossene Endscheibe aus thermoplastischem Kunststoff vorgesehen sein, an welche das Dichtprofil, beispielsweise aus einem Silikon oder einem thermoplastischen Elastomer, im Zwei-Komponenden-Spritzgussverfahren angebunden ist. Bevorzugt weist die Dichtung eine Härte im Bereich zwischen 5 und 45 Shore A, besonders bevorzugt zwischen 10 und 30 Shore A auf.

Die Dichtmasse kann an das Filterelement angebracht werden, die eine Abdichtung zwischen Rohluftseite und Reinluftseite in einem Gehäuse realisiert.

Gemäß einer günstigen Weiterbildung kann die gewickelte Adsorberlage und insbesondere das gesamte Filterelement an den Kanten eine Versiegelung aufweisen. Dabei kann die Versiegelung der Längskanten der Trägerlage eine stirnseitige Endscheibe bilden. Dadurch wird sichergestellt, dass das so gebildete Filterelement ausschließlich radial durchströmbar ist. So kann an den beiden seitlichen Enden der Flachlage entlang der Längserstreckung der Trägerlage eine Versiegelung über ein Verschlusselement erfolgen. Beispielsweise kann ein Verschlusselement über einen Klebstoff, Schaum, Thermoplast, Klammer, Schweißprozess oder eine Kombination aus den zuvor genannten Möglichkeiten gebildet werden. Denkbar ist auch der Einsatz von Heißkleber direkt während des Wickelprozesses, wenn die nachfolgende Wickellage auf die vorhergehende Wickellage aufgewickelt wird und der Heißkleber im Randbereich der Wickellagen noch ausreichend flüssig ist, um sich mit dem Kleber der vorherigen Wickellage dichtend zu verbinden. Vorteilhaft sind als Verschlusselement zwei Endscheiben vorgesehen, welche die stirnseitigen Endflächen der Filterbereiche an deren axialen Enden dichtend abschließen.

Die Versiegelung bzw. Abdichtung an den Stirnseiten des Filterelements kann auch mittels eines Versiegelungselements aus Kunststoff, insbesondere aus thermoplastischem Kunststoff, erfolgen, welches vorteilhaft als Endscheibe ausgebildet sein kann. Dieses kann einseitig aufgeschmolzen und in aufgeschmolzenem Zustand auf die axialen Stirnseiten der Filterbereiche aufgebracht werden. Das Aufschmelzen kann z. B. über Ultraschall, Heizspiegel, Infrarotbestrahlung, Heißluft erfolgen und die Verformung durch Anpressen des Versiegelungselementes auf die Stirnfläche und über deren Außenkante.

In einer besonders vorteilhaften Ausführungsform sind zwei Endscheiben als Versiegelungselemente der axialen Stirnseiten des Filterelements vorgesehen, die die insbesondere unmittelbar aneinander anschließenden Stirnseiten von Vorfilterlage, Adsorptionsfilterlage und Feinfilterlage dichtend abschließen.

Bei Einsatz von Schaum (z. B. auf Polyurethan-Basis) kann die Versiegelung (Abdichtung) im Randbereich des Filterelements durch ein Aufschäumen während des Wickelprozesses erreicht werden bzw. bei Verwendung einer Versiegelungsmasse mit zeitlich verzögertem Quellverhalten und/oder Schaumverhalten, z. B. über eine langsame Reaktionszeit bzw. durch Zuschlagstoffe, welche die Reaktion definiert verzögern oder z. B. eines thermischen Impulses zur Auslösung der Reaktion bedürfen. Damit kann die Versiegelung des Wickels während bzw. auch nach Fertigstellung des Wickels gefertigt werden. Als weitere Option besteht auch die Möglichkeit der Verwendung einer separaten Endscheibe, wie sie bei Öl- oder Kraftstofffilterelementen bekannt sind.

Eine Versiegelung der Enden der Wickellage, d. h. der axialen Kante der ersten und/oder der letzten Wickellage im aufgewickelten Zustand kann ebenfalls mit den oben aufgeführten Methoden erfolgen. Hiermit kann das Umströmen des wenigstens einen Adsorbens in den Wickellagen des Filterelements sichergestellt und Leckagen unterbunden werden.

Zweckmäßigerweise kann der Endbereich der Wickellagen am Außenmantel und/oder Innenmantel des aufgewickelten Filterelements fixiert sein. Die Fixierung kann über eine Länge und/oder Breite von wenigen Millimetern, vorzugsweise ca. 5 Millimeter bis zu mehreren Zentimetern ausgebildet sein. Sie kann z. B. erfolgen durch Verklebung der äußersten und/oder innersten Wickellage auf die darunter liegende Wickellage und Einbindung in die Versiegelung. Weiterhin sind zusätzliche Fixierelemente denkbar, wie z. B. Klebstoff, Fixiernetze, Fixiergitter, Gummis, etc. Darüber hinaus können ein zylindrisches, für das zu filternde Medium durchlässiges Element (etwa Gitter, Filtermaterial oder poröses Vollmaterial), Klammern oder in die Wickellage eingebrachte Fasern, Drähte etc. zum Einsatz kommen, welche dann in Verlängerung mindestens einmal vollständig um den ganzen Wickel des Filterkörpers herumgewickelt und mit den darunter befindlichen Wickellagen (Filterlage oder Faser-Drahtlage) verbunden werden. Diese Verbindung kann z. B. durch Verschweißen, Verkleben, Verknoten, Vernähen, etc. erfolgen.

In einer bevorzugten Ausführungsform, in der das Filterelement in einem Filtergehäuse angeordnet ist, kann die umlaufende Dichtung zwischen zwei Gehäuseteilen des Filtergehäuses axial oder radial dichtend verpressbar oder einspannbar sein. Die Dichtung kann auch radial oder axial ausschließlich an einer Dichtfläche eines Gehäuses oder Gehäuseteils dichtend anlegbar sein. Die für die Verpressung erforderliche Kraft kann über Anpresselemente wie Noppen, Wulst etc. auf der dichtungsabgewandten Seite aufgebracht werden oder als Zuganker ausgebildet sein.

Grundsätzlich ist eine Ausführung eines Filtersystems mit gewickeltem Filterkörper mit und ohne Gehäuse möglich.

Neben dem Adsorptionsfilterbereich sind bevorzugt noch der Vorfilterbereich zur Staubfiltration und ein HEPA-Feinfilterbereich vornehmlich zur Abscheidung von Aerosolen vorgesehen, wobei der Adsorptionsfilterbereich wenigstens eine aufgewickelte Adsorberlage umfasst. Gewickelt werden kann beispielsweise um ein im Filterelement verbleibendes Mittelrohr oder um einen Kern, der als herausnehmbares Werkzeug verwendet wird. Ebenso denkbar ist die Verwendung eines runden, zickzackförmig gefalteten und ringförmig geschlossenen Filterbalgs als Feinfilterbereich, der als Wickelbasis für die Adsorberlagen verwendet werden kann.

Hinsichtlich der unterschiedlichen Anforderungen bezüglich Volumenströmen und Standzeiten kann der Wickelköper als ein Baukasten betrachtet werden, bei dem über die Zylinderhöhe und den Durchmesser auf die verschiedenen Anforderungen unter Verwendung der gleichen Anschlusskomponenten reagiert werden kann, was vorteilhaft Werkzeugkosten einspart.

Immobilisierte Adsorbenspartikel haben Vorteile bzgl. mechanischer Stabilität und Homogenität des Filterelements. Es ergeben sich deutlich höhere Verweilzeiten des zu filternden Mediums im Filterelement, was infolge des mehrlagigen Aufbaus zu niedrigeren Durchbrüchen und höheren Kapazitäten des Filterelements führt.

Die Anpassung der Adsorptionsperformance an das jeweilige Anforderungsprofil sowie den Bauraum kann durch optimierte Wickellagenanzahl (d. h. Adsorber-Menge) und eine geeignete Materialauswahl optimiert werden.

Die Erfindung betrifft ferner ein Innenraumluftfiltersystem für die Fahrerkabine von Land- und Arbeitsmaschinen, insbesondere mit Spritz- oder Sprühvorrichtungen für Pflanzenschutz- oder Düngemittel, umfassend ein erfindungsgemäßes Innenraumluftfilterelement und ein Gehäuse mit einem Lufteinlass und einem Luftauslass, in welchem das Innenraumluftfilterelement dichtend die Einlassseite von der Auslassseite trennt.

Die Erfindung betrifft ferner eine Fahrerkabine eines Fahrzeugs oder einer Arbeitsmaschine umfassend ein erfindungsgemäßes Innenraumluftfiltersystem sowie die Verwendung eines erfindungsgemäßen Innenraumluftfilterelements oder Innenraumluftfiltersystems in einer Fahrerkabine eines Fahrzeugs oder einer Arbeitsmaschine.

Neben der Verwendung für die Filtration von Innenraumluft in Fahrerkabinen von Land- und Arbeitsmaschinen, insbesondere mit Spritz- oder Sprühvorrichtungen für Pflanzenschutz- oder Düngemittel, kann das erfindungsgemäße Filterelement auch zur Filtration von Atemluft in anderen Innenräumen wie Kraftfahrzeugen, Flugzeugen o. ä. Verwendung finden. Daneben ist auch eine Verwendung des Filterelements für die Filtration von Zuluft zu verschiedenen Prozessen, wie beispielsweise der Zuluft zu Brennstoffzellen in stationären oder mobilen Anwendungen wie Kraftfahrzeugen oder Flugzeugen denkbar.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Innenraumluftfilterelements oder des Innenraumluftfiltersystems. Dabei wird der Fachmann auch Einzelaspekte als Verbesserungen oder Ergänzungen zu der jeweiligen Grundform der Erfindung zufügen oder abändern.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen dabei beispielhaft:
- Fig. 1: einen Längsschnitt eines Innenraumluftfilterelements mit gewickeltem Filterkörper gemäß einer ersten Ausführungsform mit einer um den Wickel gelegten weiteren insbesondere plissierten Filterlage;
- Fig. 2: eine teilaufgeschnittene Draufsicht auf das Innenraumluftfilterelement gemäß Fig. 1;
- Fig. 3: einen Längsschnitt eines Innenraumluftfilterelements mit gewickeltem Filterkörper gemäß einer weiteren Ausführungsform mit einem um einen Filterbalg angeordneten Wickel;
- Fig. 4: eine teilaufgeschnittene Draufsicht auf das Innenraumluftfiltersystem gemäß Fig. 3;
- Fig. 5: einen Längsschnitt eines Innenraumluftfilterelements mit gewickeltem Filterkörper gemäß einer weiteren Ausführungsform mit einer in den Wickel integrierten Feinfilterlage;
- Fig. 6: eine teilaufgeschnittene Draufsicht auf das Innenraumluftfiltersystem gemäß Fig. 5;
- Fig. 7: den Aufbau eines Halbzeugs mit Trägerlage und fixierter Adsorberlage;
- Fig. 7a: eine Lage einer fixierten Aktivkohleschüttung auf einer Trägerschicht;
- Fig. 7b: eine erste Ausführungsform eines aus zwei Lagen gemäß Fig. 7a gebildeten Halbzeugs einer Adsorptionsfilterlage;
- Fig. 7c: eine zweite Ausführungsform eines aus zwei Lagen gemäß Fig. 7a gebildeten Halbzeugs;
- Fig. 7d: ein aus einer Lage gemäß Fig. 7a und einer Deckschicht gebildetes Halbzeug einer Adsorptionsfilterlage ;
- Fig. 7e: eine Adsorptionsfilterlage aus zwei Lagen eines Halbzeugs nach Fig. 7d;
- Fig. 8: einen Längsschnitt eines Innenraumluftfiltersystems mit gewickeltem Filterkörper gemäß einer weiteren Ausführungsform;
- Fig. 9 - 15: verschiedene Abdichtungsvarianten für ein Filterelement;
- Fig. 16: eine Fahrerkabine mit einem Innenraumluftfiltersystem.

### Ausführungsform(en) der Erfindung

In den Figuren sind gleiche oder gleichartige Komponenten mit gleichen Bezugszeichen beziffert. Die Figuren zeigen lediglich Beispiele und sind nicht beschränkend zu verstehen.

In den folgenden Ausführungsbeispielen ist beispielhaft Aktivkohle als Adsorbens eingesetzt. Jedoch ist auch die Verwendung anderer Adsorbentien denkbar, wie Zeolithe, Silicagele, Metalloxide wie Aluminiumoxid, Kupferoxid oder Manganoxid, Molekularsiebe wie z. B. MOFs, Schichtsilikate, Nanoclay(s), oder Mischungen von Adsorbentien.

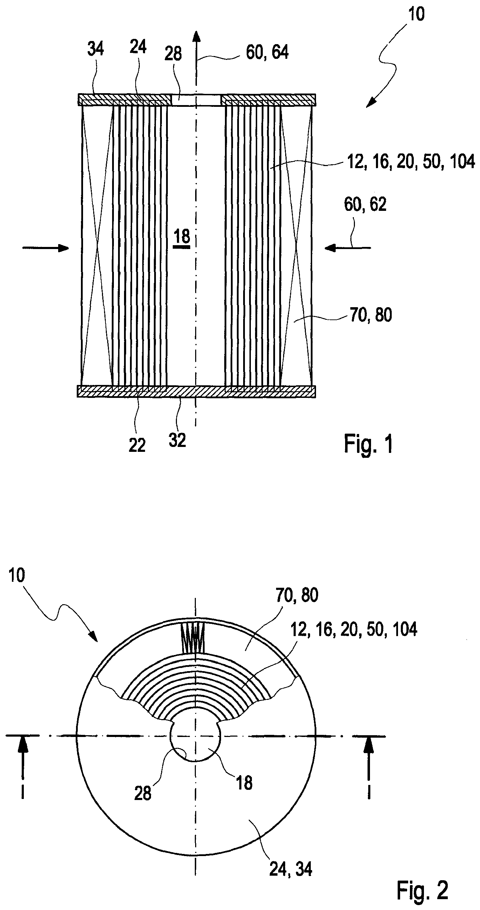

Die Figuren 1 und 2 zeigen zur Erläuterung der Erfindung eine erste Ausgestaltung eines Filterelements 10. Figur 1 zeigt eine Schnittansicht des Filterelements 10 nach einem Ausführungsbeispiel der Erfindung in der Art einer Filterkerze mit einem Adsorptionsfilterbereich 50. Ein aufgewickeltes Halbzeug bildet einen Wickelkörper 20 als Adsorptionsfilterbereich 50 um einen axialen Kanal 18, wobei das Halbzeug eine immobilisierte Adsorberlage 104 mit Aktivkohle als Filtermedium 16 aufweist. Figur 2 zeigt eine Frontalansicht auf eine teilweise aufgeschnittene Stirnseite 24 des Filterelements 10.

Der Wickelkörper ist von einem weiteren Filterelement umgeben, das vorzugsweise ein Feinfilterelement 70 und/oder ein Partikelfilterelement 80 aufweist. An den Stirnseiten 22, 24 ist jeweils eine Endscheibe 32, 34 vorgesehen, welche den Wickelkörper 20 sowie das Feinfilterelement 70 und/oder das Partikelfilterelement 80 stirnseitig abdichtet, so dass ein zu filterndes Medium 60 ausschließlich nur durch die Wickellagen des Wickelkörpers 20 und das umgebende weitere Filterelement 70, 80 strömen kann. Dabei ist die eine, z. B. untere Endscheibe 32 ganz geschlossen und dichtet so den Kanal 18 nach unten ab, während die axial gegenüberliegende, z. B. obere, Endscheibe 34 in ihrer Mitte eine Öffnung 28 aufweist, durch welche das Medium 60 durchtreten kann.

Das weitere Filterelement ist beispielsweise mit einem plissierten Filtermedium ausgeführt, wobei in der Draufsicht in Fig. 2 nur ein schmaler Bereich oder Ausschnitt des plissierten Filtermediums dargestellt ist, welches den Wickelkörper 20 des Adsorptionsfilterbereichs 50 umgibt.

Ein zu filterndes Medium 60, z. B. Rohluft 62, tritt auf der Rohseite des Filterelements 10 durch das Feinfilterelement 70 und/oder Partikelfilterelement 80 in den Wickelkörper 20 des Filterkörpers 12 ein und verlässt den Filterkörper 12 auf dessen Reinseite und tritt als gefiltertes Medium 60, z. B. Reinluft 64, aus.

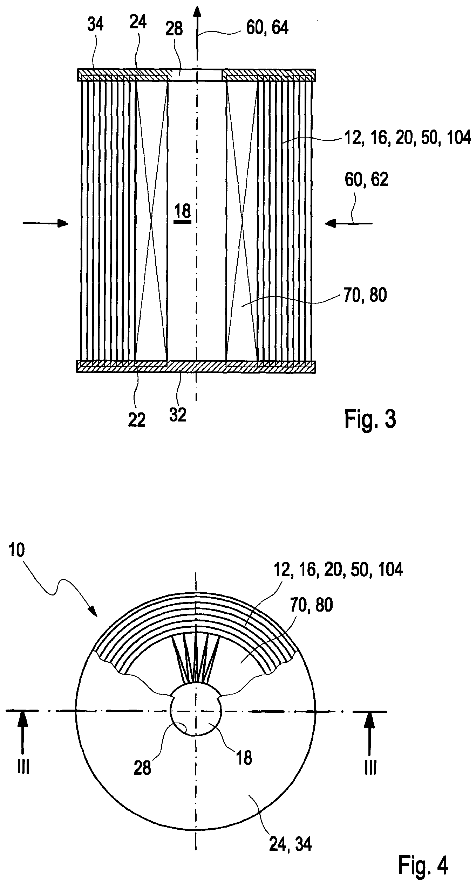

Die Figuren 3 und 4 zeigen als Schnittansicht und Draufsicht eine inverse Ausgestaltung eines Filterelements 10, bei dem der Wickelkörper 20 mit dem Adsorptionsfilterbereich 50 das weitere Filterelement mit dem Feinfilterelement 70 und/oder dem Partikelfilterelement 80 umgibt.

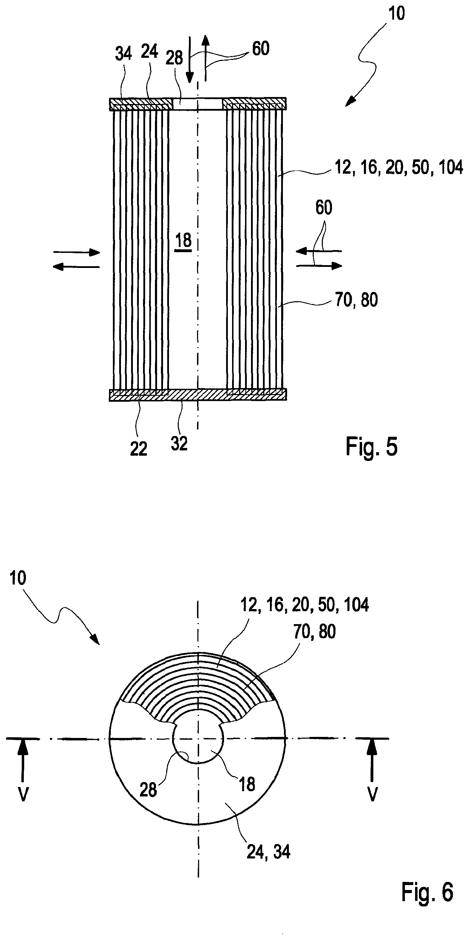

Die Figuren 5 und 6 zeigen als Schnittansicht und Draufsicht eine weitere Ausgestaltung eines Filterelements 10, bei der der Wickelkörper 20 die Funktionalitäten sowohl des Adsorptionsfilterbereichs 50 als auch den eines Feinfilterelements 70 und eines Partikelfilterelements 80 umfasst. Dabei ist bevorzugt das Partikelfilterelement 80 innen angeordnet. Dies ist insbesondere für Filterelemente vorteilhaft, welche von innen nach außen durchströmt werden. Bei dieser Durchströmungsrichtung ist somit das Partikelfilterelement 80 dem Feinfilterelement 70 und dem Adsorptionsfilterbereich 80 vorgeschaltet. Bei Durchströmung von außen nach innen ist entsprechend vorteilhaft das Partikelfilterelement 80 außen anzuordnen.

Zur Herstellung eines Filterelements kann ein Halbzeug verwendet werden, bei dem zusätzlich zur immobilisierten Adsorberlage 104 eine Feinfilterlage und eine Partikelfilterlage zusammengefügt und zum Wickelkörper 20 aufgewickelt werden. Dabei kann die Feinfilterlage und/oder die Partikelfilterlage in eine Trägerlage der Adsorberlage 104 und/oder in eine diese abdeckende Decklage integriert sein.

Diese Ausgestaltung erlaubt eine flexible Durchströmungsrichtung eines zu filternden Mediums 60, d. h. in einem ersten Betriebsmodus des Filterelements 10 kann das zu filternde Medium über den Kanal 18 in den Filterkörper 12, d. h. den Wickelkörper 20, eintreten und durch den Außenmantel des Wickelkörpers 20 austreten und in einem anderen Betriebsmodus in umgekehrter Durchströmungsrichtung.

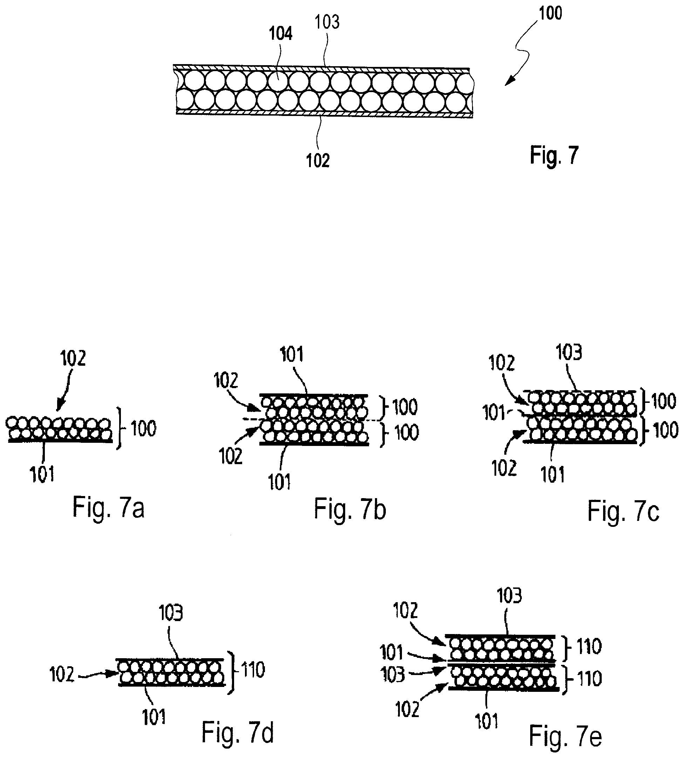

Figur 7 illustriert einen prinzipiellen Aufbau eines Halbzeugs mit einer Lage 100 mit einer fixierten Schüttung von Adsorbenspartikeln, umfassend eine Trägerlage 102, eine Deckschicht 103 und eine Adsorberlage 104, z. B. in Form einer Schüttlage, mit immobilisierten Adsorbenspartikeln. Ein solches Halbzeug kann zur Herstellung eines Wickelkörpers eines Filterelements eingesetzt werden.

Den Figuren 7a - 7e sind weitere mögliche Aufbauten einer Adsorptionsfilterlage für ein erfindungsgemäßes Filterelement zu entnehmen. Fig. 7a zeigt eine Lage 100 einer fixierten Schüttung von Aktivkohlepartikeln, umfassend eine Trägerschicht 101 und eine Schüttlage 102 mit Aktivkohlepartikeln.

Zwei dieser Lagen können auf verschiedene Weise zu Halbzeugen verbunden werden, welche einlagig oder mehrlagig eine Adsorptionsfilterlage bilden können. In der Ausführungsform gemäß Fig. 7b werden zwei derartige Lagen 100 derart aufeinander angeordnet, dass jeweils die Schüttlagen 102 aufeinander liegen, wobei ein Halbzeug gebildet wird, welches beidseitig von den Trägerlagen 101 begrenzt wird. Mehrere dieser Halbzeuge können zur Bildung einer Gesamtadsorptionfilterlage aufeinander gestapelt werden.

In der Ausführungsform nach Fig. 7c sind zwei derartige Lagen 100 in gleicher Orientierung aufeinander angeordnet, es kann jedoch auch eine größere Anzahl von derartigen Lagen 100 auf diese Weise aufeinanderliegend angeordnet sein. Um eine abgeschlossene Adsorptionsfilterlage zu bilden, kann eine Deckschicht 103 auf die Schüttlage 102 aufgebracht werden.

Fig. 7d zeigt eine Ausführungsform eines Halbzeugs 110 mit einer Lage 102 einer fixierten Schüttung aus Aktivkohlepartikeln, die auf eine Trägerschicht 101 aufgebracht und von einer Deckschicht 103 bedeckt sind. Das Halbzeug 110 kann entweder einlagig oder wie in Fig. 7e gezeigt in einer zwei- oder mehrlagigen Anordnung von aufeinanderliegenden Halbzeugen 110 eine Gesamtadsorptionsfilterlage bilden.

Die Schüttlagen 102 sind in den Ausführungsformen mittels feiner Netze von Klebstofffäden mit den jeweiligen Träger- und Deckschichten verbunden, es können jedoch auch andere Verbindungsarten gewählt werden.

Die Trägerlage 102 kann jeweils zumindest teilweise die Funktion eines Partikelfilterelements bereitstellen und optional auch die eines Feinfilterelements.

Das jeweilige Halbzeug wird auf einem Innenkern mit geeignetem Durchmesser, z. B. 30 mm bis 60 mm Durchmesser, zu einem Wickelkörper (Rundelement) aufgewickelt. Während des Wickelprozesses erfolgt an den beiden seitlichen Enden der Trägerlagen 101 und weiteren Lagen eine Versiegelung. Dies kann z. B. über einen Klebstoff, Schaum, Thermoplast, Klammer, in einem Schweiß- oder Dosierprozess oder einer Kombination davon erfolgen. Die Abdichtung der axialen Schnittkante der letzten Lage erfolgt ebenfalls mit den oben aufgeführten Möglichkeiten. Die Fixierung des Endbereichs (wenige Millimeter, vorzugsweise ca. 5 mm bis zu mehreren Zentimetern) erfolgt durch Verklebung auf die darunter liegende Lage mittels der Abdichtung bzw. über zusätzliche Fixierelemente wie Klebstoff, Fixiernetze, Fixiergitter, Gummis, zylindrisches luftdurchlässiges Element(e) (Gitter, Filtermaterial oder poröses Vollmaterial), Klammern oder in die Lage eingebrachte Fasern, Drähte etc., welche dann in Verlängerung mindestens einmal vollständig um den ganzen Wickel herumgewickelt werden und mit den darunter befindlichen Lagen (Filterlage oder Faser- Drahtlage) fixiert werden, z. B. durch Verschweißen, Verkleben, Vernähen.

Um das Umströmen der Adsorberlage 104 und damit Leckagen zu vermeiden, sollten die aufgewickelten Lagen im Randbereich des Wickelkörpers zusätzlich abgedichtet werden. Diese Abdichtung kann durch eine nachträgliche thermoplastische Umformung (z. B. Aufschmelzen mittels Ultraschall, Heißspiegel, Infrarotbestrahlung, Heißluft mit folgender Verformung durch Anpressen) des Versiegelungselementes erfolgen bzw. bei z. B. Einsatz von Heißkleber direkt während des Wickelprozesses, wenn die nachfolgende Lage auf die vorhergehende Lage aufgewickelt wird und der Kleber im Randbereich der Lagen noch ausreichend flüssig ist, um sich mit dem Kleber der vorherigen Lage dichtend zu verbinden.

Der Aufbau der Aktivkohlelagen kann dabei folgende Varianten beinhalten:
(a) Trägerlage 102 (z. B. einfaches Spunbond) - Adsorberlage 104 - Trägerlage 102
(b) Trägerlage 102 - Adsorberlage 104 - Partikelvlies (z. B. Vlies mit Meltblown versehen)
(c) Partikelvlies - Adsorberlage 104 - Partikelvlies
(d) Trägerlage 102 - Adsorberlage 104 - Partikelvlies - Adsorberlage 104 - Trägerlage 102
(e) Trägerlage 102 - Adsorberlage 104 - Partikelvlies

Das Partikelvlies kann aus Cellulose oder aus synthetischen Materialien hergestellt sein.

Eine weitere Option besteht darin, dass in der Wickellage mindestens zwei Adsorbentien hintereinander aufgebracht sind und dadurch im inneren Bereich des Wickels (z. B. über 3 Lagen hinweg) sich ein anderes Adsorbens befindet als im äußeren Bereich. Dabei ist es nicht zwingend, dass die Adsorbentien auf derselben bzw. auf einer einstückigen Trägerlage bzw. Decklage aufgebracht sind.

Zur Abscheidung von Partikeln kann optional ein Partikelabscheidemedium auf die Mantelfläche des Wickelkörpers in Form einer Flachlage bzw. in gefalteter Ausführung aufgebracht werden, welche optional mit der gleichen oder einer der oben beschriebenen Optionen zur stirnseitigen Abdichtung versehen wird oder als separates Element aufsteckbar oder aufschiebbar angeordnet ist.

Bei der gefalteten Ausführung kann die Stirnseite auch über ein Seitenband, eine Folie oder eine aushärtende Klebeschicht abgedichtet sein.

Es kann im Kern des Wickelkörpers ein Partikel-/Aerosolabscheideelement integriert werden, welches entweder direkt vor dem Austritt des zu filternden Mediums angebracht ist oder die innerste Lage des Wickelkörpers darstellt. Dabei kann der Partikel-/Aerosolabscheider als separates Element oder als integrierte Variante eingebracht sein, wobei bei der integrierten Variante ein spezielles Material bzw. optional die Trägerlage 102 als Partikellage genutzt werden kann. Bei der Variante direkt vor dem Austritt des zu filternden Mediums kann der Partikelfilter mit z. B. dem Anschlusselement einstückig (Verschweißung) bzw. mehrteilig (Verklebung / Klemmung / Verpressung [z. B. offenporiger Schaum]) verbunden sein.

Die Realisierung einer Anschlussgeometrie an den Wickelkörper erfolgt z. B. über ein Stutzenelement, welches von einer Stirnseite aus in den Wickelkörper hineinragt und mit der stirnseitigen Abdichtung des Wickelkörpers luftgasdicht verbunden ist. Je nach Eindringtiefe des Stutzens in den Wickelköper ist es hinsichtlich der Stabilität sinnvoll, eine Auflagefläche an den Stutzen anzuformen, auf der die Stirnseite des Wickelkörpers aufliegt. Je nach Ausführung des Stutzens kann auch auf ein Hineinragen des Stutzens in den Wickelkörper hinein komplett verzichtet werden, wenn eine ausreichend feste Verbindung der Stirnseitenabdichtung mit dem Stutzen durch z. B. eine Klebeverbindung / Haftkraft (Adhäsion/Kohäsion) erreicht werden kann. Optional kann auch ein entsprechendes Stutzenelement an beiden Stirnseiten angebracht werden, wobei dann das zweite Stutzenelement nicht zwingend die gleichen Abmessungen des ersten Stutzenelements haben muss. Das Stutzenelement kann zur weiteren Kontaktierung über ein Tannenbaumprofil oder eine vergleichbare Aufsteckgeometrie verfügen als auch über einen Bajonettverschluss oder ein Schraubgewinde mit axialer oder radialer Abdichtung. Auch der Einsatz einer Schnellkupplung ist dabei möglich, wobei dann der Stutzen entweder die Schnellkupplung darstellt bzw. beinhaltet oder gar das einzuschiebende Rohrstück / Schlauchstück, welches in eine solche Kupplung eingesteckt wird, darstellt.

Das Stutzenelement kann aber auch weitere Austrittsstutzen beinhalten. Weiterhin kann der Austrittsstutzen mit einer Geometrie (z. B. Außensechskant) versehen sein, welche ermöglicht, dass über handelsübliches Werkzeug eine sichere Verschraubung / Verbindung mit der Luftführung zur Kabine herzustellen ist. Der Austrittsstutzen kann dabei aus Kunststoff oder Metall hergestellt sein.

Als weitere Option kann der Austrittsstutzen auch an den Wickelkörper in der Form angebracht werden, dass der Stutzen direkt mit einer Vergussmasse an den Wickelkörper angegossen wird. Dabei erfolgt die Versiegelung und Befestigung der Stirnseite durch die Vergussmasse, welche nach dem Aushärten vergleichbar fest sein kann wie ein konventioneller Thermoplast wie Polypropylen oder Polyamid.

Ferner kann eine Grobstaubmatte zur Partikelfiltration anstelle eines gefalteten Partikelfilters vorgesehen sein bzw. zusätzlich über den Partikelfilter geschoben sein. Die Grobstaubmatte kann als Schaum oder Vliesmatte ausgeführt sein. Das Partikelfilterelement kann somit unabhängig vom Wickelkörper gewechselt werden.

Für den Aufbau von Adsorberlagen und Filteranordnungen lassen sich die Adsorberlagen hinsichtlich Materialauswahl (AK-Sorte, Zeolithe, Silicagele, Metalloxide wie Aluminium-, Kupfer- oder Manganoxid, Molekularsiebe wie z. B. MOFs) und Flächengewicht optimieren, um eine gezielte Anpassung an die Adsorptionsaufgabe zu realisieren.

Das vorstehend in verschiedenen Ausgestaltungen beschriebene Filterelement 10 kann als gehäuseloses Filtersystem eingesetzt werden, wobei ein Anschlussmittel an die für einen Mediendurchtritt offene Endscheibe angeschlossen werden kann, mit dem das Filtersystem mit einer Medienleitung oder dergleichen verbunden werden kann. Denkbar ist auch, zwei oder mehr Filterelemente 10 oder Filtersysteme geometrisch in Serie anzuordnen, was strömungsmäßig einer Parallelschaltung entspricht.

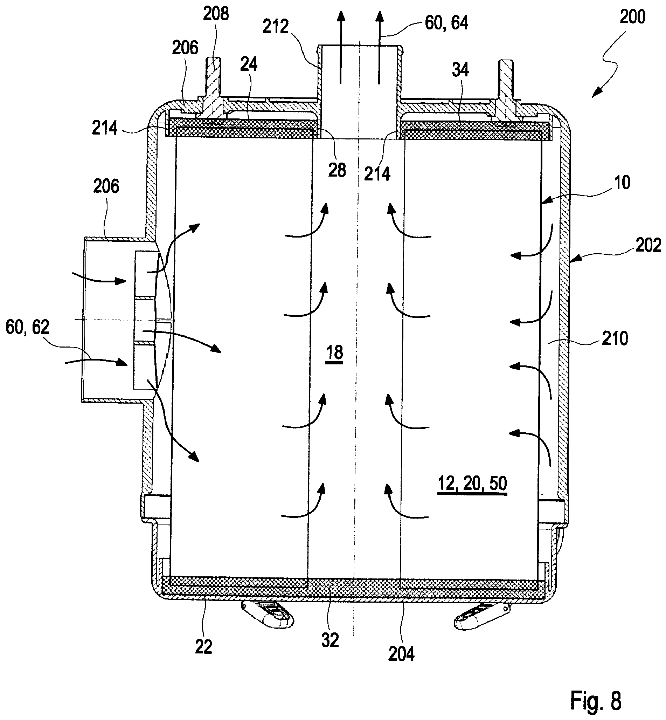

Figur 8 zeigt eine Ausgestaltung eines Filtersystems 200 mit einem Filtergehäuse 202, in welchem ein Filterelement 10 mit Adsorptionsfilterbereich 50 in Form eines Wickelkörpers 20 angeordnet ist. Das zu filternde Medium 60, z. B. Rohluft 62, tritt durch einen Eingangsstutzen 206 in der Mantelfläche des Gehäuses 202 in dieses ein.

Das Filterelement 10 ist mit seiner unteren Stirnseite 22 in eine geschlossene Endscheibe 32 und mit seiner oberen Stirnseite 24 in eine Endscheibe 34 mit einer zentralen Öffnung 28 eingebettet, in die ein Anschlussstutzen 212 mit einem Bund 214 hineinragt. Die Endscheibe 34 umschließt an ihrer Öffnung 28 den Bund 214 dichtend, so dass die Reinseite des Filterelements 10 dichtend von der Rohseite getrennt ist.

Das Filterelement 10 kann aus dem Gehäuse 202 entfernt werden, indem dessen Deckel am Gehäuseboden 204 geöffnet wird. Durch Schließen des Deckels wird das Filterelement 10 zwischen Gehäuseboden 204 und oberem Gehäusebereich 206 axial eingespannt.

An der dem Gehäuseboden 204 gegenüberliegenden Gehäuseseite sind im oberen Gehäusebereich 206 Befestigungsmittel 208 angeordnet, z. B. Schrauben, mit denen das Filtergehäuse 202 an einem Einbauort sicher befestigt werden kann.

Zwischen Filtergehäuse 202 und Filterkörper 12 befindet sich ein Freiraum 210, durch den ein zu filterndes Medium 60, z. B. Rohluft 62, zum Filterelement 10 strömt. Nach Durchströmen des Filterelements 10 strömt das gefilterte Medium 60, z. B. Reinluft 64, in den einseitig geschlossenen Kanal 18 und anschließend durch einen Gehäusestutzen 212 aus dem Filtersystem 200 aus.

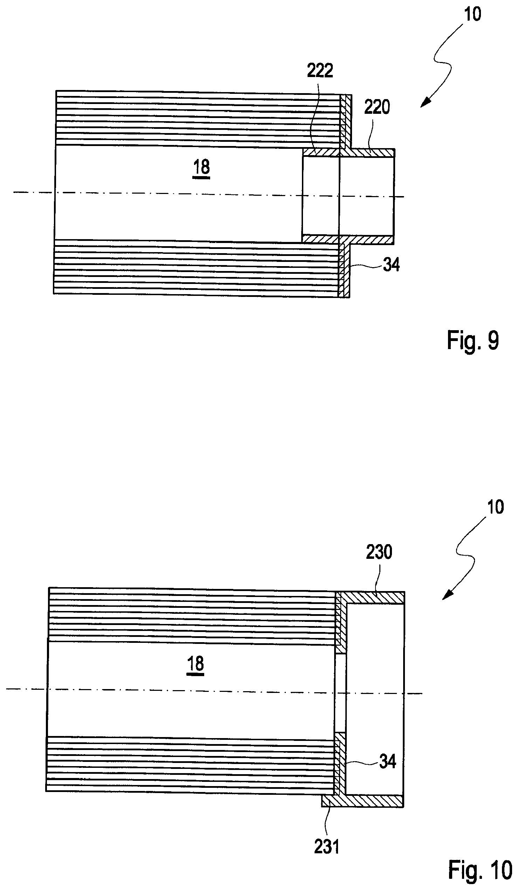

In den Figuren 9 bis 16 sind Varianten von Abdichtungsmöglichkeiten zwischen Rohseite und Reinseite des Filterelements 10 dargestellt.

Figur 9 zeigt ein Dichtprofil einer Endscheibe 34 mit einem axial nach außen gerichteten Ansatz 220, wobei dessen Dichtfläche radial innen angeordnet ist. Dies ermöglicht eine radiale Abdichtung am Innendurchmesser des Ansatzes 220 und einen Dichtbereich außerhalb des Filterelements 10.

Alternativ oder zusätzlich kann der Ansatz 220 auch einen in den Kanal 18 des Filterelements 10 hinein ragenden Bund 222 aufweisen, der eine radiale Abdichtung am Innendurchmesser des Filterelements 10 und damit einen Dichtbereich innerhalb des Filterelements 10 ermöglicht.

Figur 10 zeigt zwei Alternativen von Dichtflächen, die eine radiale Abdichtung ermöglichen. Dabei kann an der Endscheibe 34 über eine radial nach innen gerichtete Dichtfläche 230 oder über eine radial nach außen gerichtete Dichtfläche 231 eine Abdichtung gegen eine korrespondierende Fläche eines Gehäuses oder Anschlussmittels (nicht gezeigt) ermöglicht werden. Die Dichtflächen 230, 231 können an einem umlaufenden Rand an der Endscheibe 34 ausgebildet sein, der sich axial vom Filterelement 10 weg erstreckt.

Alternativ oder zusätzlich kann an der Endscheibe 34 auch ein Bund 231 als Dichtprofil angesetzt sein, der sich Richtung Filterelement 10 erstreckt und dessen obere Kante abdeckt, was eine radiale Abdichtung am Außendurchmesser des Filterelements 10 ermöglicht.

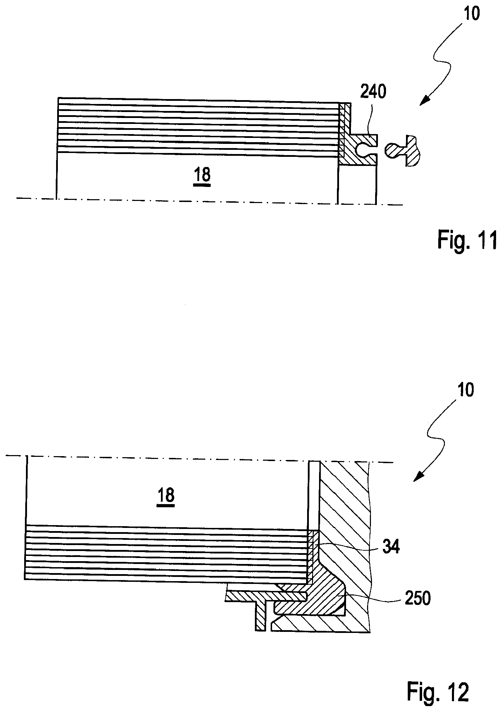

Figur 11 zeigt eine Variante eines Dichtprofils 240 mit Schlüssel-Schloss-Profil, bei dem zwei auf der Endscheibe 34 umlaufende Dichtlippen vorgesehen sind, die sich axial vom Filterelement 10 weg erstecken. Ein nicht näher bezeichnetes Gegenelement mit einem komplementären Omega-Profil kann dichtend zwischen die beiden Dichtlippen eingreifen, so dass das Filterelement 10 radial abgedichtet ist.

Figur 12 zeigt eine radial wirkende Dichtung. Die Endscheibe 34 ist bevorzugt aus einem gießbaren Werkstoff wie Polyurethan, beispielsweise Polyurethanschaum gebildet und fest mit einer Stirnseite des gewickelten Filterelements 10 verbunden. Die Endscheibe umfasst an ihrem Außenumfang ein Dichtprofil 250, welches eine sich parallel zur Mittelachse des Filterelements erstreckende Nut mit einer oder bevorzugt zwei ringförmigen, radial wirkenden Dichtflächen aufweist, in welche ein gehäuseseitiger Steg oder eine gehäuseseitige Kante eingreifen kann, der dichtend mit den Dichtflächen in Kontakt bringbar ist. Das Dichtprofil 250 kann bevorzugt die Kante des Filterelements 10 dichtend umgreifen. Ein entsprechendes Filtergehäuse kann mit einem Bund dichtend zwischen die Dichtlippen eingreifen und mit einem Deckel oder dergleichen dichtend fixiert werden. Bevorzugt wird dabei das Dichtprofil 250 radial von einem weiteren Gehäuseteil, beispielsweise von einem Gehäusedeckel radial außen abgestützt, bevorzugt derart, dass die Dichtwirkung an den Dichtflächen gewährleistet ist.

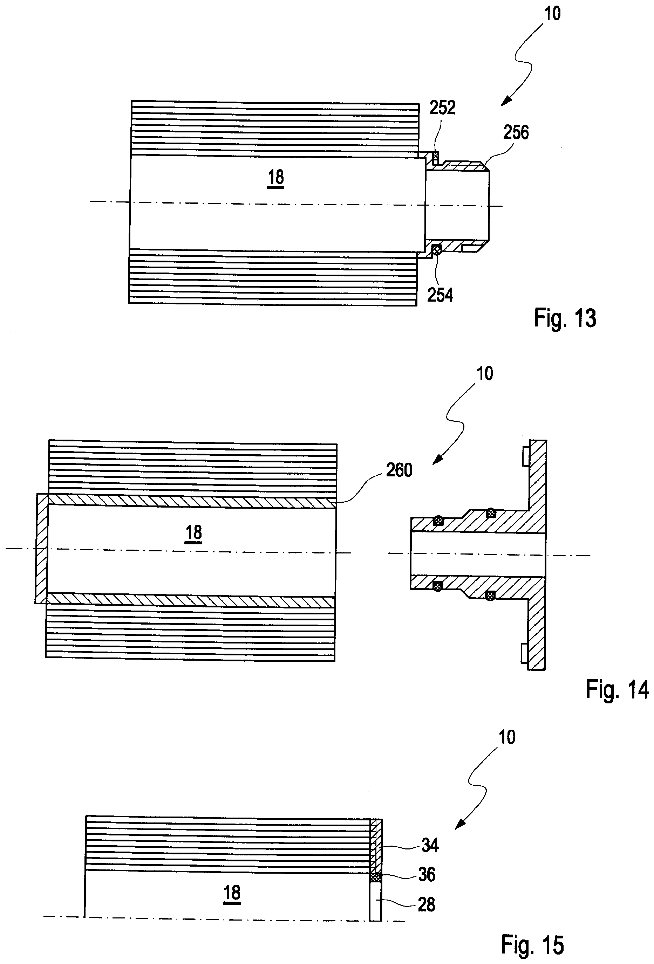

Figur 13 zeigt ein Filterelement 10 mit einem Stutzen 256 mit Gewinde oder Bajonettverschluss, der sich axial weg vom Filterelement 10 erstreckt. Der Stutzen 256 kann an ein Mittelrohr angesetzt sein, das im Kanal 18 angeordnet ist (nicht dargestellt) oder an der Endscheibe 34 angesetzt sein.

In einer ersten Variante kann eine axiale Dichtung erreicht werden durch eine um den Stutzen 256 umlaufenden Dichtring 252 (in der oberen Bildhälfte dargestellt). In einer weiteren Variante, die in der unteren Bildhälfte dargestellt ist, kann ein umlaufender Dichtring 254 in einer Nut an der Außenseite des Stutzens 256 angeordnet sein, womit eine radiale Abdichtung erreicht wird. Der Dichtring 252, 254 kann beispielsweise ein O-Ring, eine Flachdichtung oder eine 2K-Dichtung sein.

Figur 14 zeigt eine Variante, bei der das Filterelement 10 auf einen Wickelkern 260 aufgewickelt ist. Der Wickelkern 260 besitzt eine Aufnahme für eine separate oder eine angespritzte Dichtung (nicht dargestellt). Diese Dichtung kann als radiale und/oder axiale Dichtung ausgeführt sein. Das Filterelement 10 verbleibt auf dem Wickelkern 260, das im Filterelement 10 ein Mittelrohr bildet und mit offenem oder geschlossenem Boden ausgebildet sein kann.

Figur 15 zeigt eine Variante, bei der eine radiale Abdichtung durch die Endscheibe 34 erfolgt, die am Innendurchmesser mit einer Lippe 36 in die Öffnung 28 ragt. Die Dichtung, z. B. ein Vliesring, ist Bestandteil der Endscheibe 34.

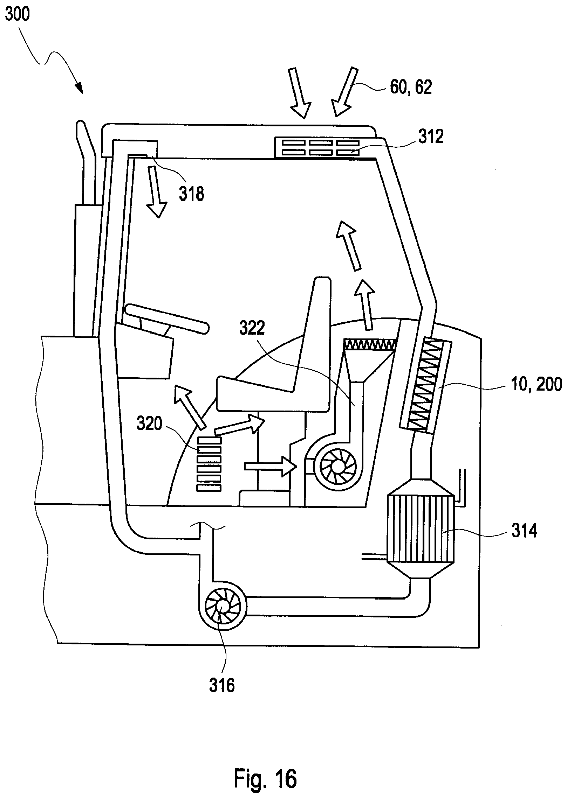

Figur 16 zeigt eine Fahrerkabine 300 eines landwirtschaftlichen Fahrzeugs mit einem Innenraumluftfiltersystem 200. Frischluft 62 wird in das Innenraumluftfiltersystem 200 mittels eines Lüfters 316 durch einen Einlass 312 eingesogen und gelangt über das Innenraumluftfiltersystem in eine Klimatisierungsvorrichtung 314. Die klimatisierte und gefilterte Luft gelangt über Auslässe 318 und 320 in den Innenraum und wird zum Teil mittels einer Umlufteinrichtung 322 umgewälzt.

Neben einer Durchströmung von außen nach innen, wie in den vorstehenden Ausführungsbeispielen gezeigt, kann ein erfindungsgemäßes Innenraumfilterelement selbstverständlich auch in umgekehrter Richtung, d. h. von innen nach außen durchströmt werden.

## Patentansprüche

1. Innenraumluftfilterelement (10), insbesondere für eine Fahrerkabine (302) von Land- und Arbeitsmaschinen, insbesondere mit Spritz- oder Sprühvorrichtungen für Pflanzenschutz- oder Düngemittel, umfassend einen Filterkörper (12) mit einem Adsorptionsfilterbereich (50) sowie einem Feinfilterbereich (80) insbesondere zur Abscheidung von Aerosolen,
wobei der Filterkörper (12) als Wickelkörper mit wenigstens einer Wickellage ausgebildet ist und einen zentralen Strömungsraum umschließt.

2. Innenraumluftfilterelement nach Anspruch 1, **dadurch gekennzeichnet, dass** als Feinfilterbereich (80) ein ungefaltetes oder zickzackförmig gefaltetes Filtermedium (82) aus einem Glasfasermedium oder einem synthetischen HEPA-Filtermedium vorgesehen ist, insbesondere ein Glasfasermedium mit einer oder zwei Deckschichten aus einem Spinnvlies.

3. Innenraumluftfilterelement nach Anspruch 1 oder 2, **gekennzeichnet durch** einen anströmseitigen Vorfilterbereich (70) insbesondere zur Abscheidung von Stäuben.

4. Innenraumluftfilterelement nach Anspruch 3, **dadurch gekennzeichnet, dass** als Vorfilterbereich (70) ein ungefaltetes oder zickzackförmig gefaltetes Filtermedium (72) aus Zellulose, Kunststoffschaum oder Vlies verwendet wird.

5. Innenraumluftfilterelement nach einem der vorhergehenden Ansprüche, **dadurch gekennzeichnet, dass** der Adsorptionsfilterbereich (50) aus einem Halbzeug aus wenigstens einer Trägerlage (101) und wenigstens einer fixierten Adsorberlage (102) mit wenigstens einem Adsorbens gebildet ist.

6. Innenraumluftfilterelement nach einem der vorhergehenden Ansprüche, **dadurch gekennzeichnet, dass** der Wickelkörper auf ein Rohrelement gewickelt ist, das als Stützkörper im Wickelkörper verbleibt.

7. Innenraumluftfilterelement nach wenigstens einem der vorhergehenden Ansprüche, **dadurch gekennzeichnet, dass** das Filtermedium (72, 82) des Vorfilterbereichs (70) und/oder des Feinfilterbereichs (80) in den Wickelkörper integriert sind/ist, insbesondere als Trägerlage (101) oder zusätzliche Lage zur Trägerlage (101).

8. Innenraumluftfilterelement nach wenigstens einem der vorhergehenden Ansprüche, **dadurch gekennzeichnet, dass** die Vorfilterlage (70) und/oder die Adsorptionsfilterlage (50) und/oder die Feinfilterlage (80) jeweils ein separates Teilfilterelement bilden.

9. Innenraumluftfilterelement nach einem der vorhergehenden Ansprüche, **gekennzeichnet durch** eine umlaufende Dichtung zur Trennung einer Rohseite von einer Reinseite beim Einbau in ein Filtergehäuse (90).

10. Innenraumluftfilterelement nach Anspruch 9, **dadurch gekennzeichnet, dass** die Dichtung durch ein umlaufendes Dichtprofil aus einem Polymer, insbesondere aus einem angeschäumten, geschlossenporigen Schaum zum Beispiel aus Polyurethanschaum, gebildet ist.

11. Innenraumluftfilterelement nach einem der vorhergehenden Ansprüche, **dadurch gekennzeichnet, dass** als Adsorbens eine hydrophobe Aktivkohle verwendet wird.

12. Innenraumfilterelement nach einem der vorhergehenden Ansprüche, **dadurch gekennzeichnet, dass** der Filterkörper ausschließlich radial durchströmbar ist.

13. Innenraumluftfilterelement nach einem der vorhergehenden Ansprüche, **dadurch gekennzeichnet, dass** Vorfilterbereich (70), Feinfilterbereich (50) und Adsorptionsfilterbereich (50) aufeinander folgend und insbesondere unmittelbar aneinander anliegend im Innenraumluftfilterelement angeordnet sind.

14. Innenraumluftfiltersystem (200) für eine Fahrerkabine (300) von Land- und Arbeitsmaschinen, insbesondere mit Spritz- oder Sprühvorrichtungen für Pflanzenschutz- oder Düngemittel, umfassend ein Innenraumluftfilterelement (10) nach einem der vorgehenden Ansprüche und ein Gehäuse (90) mit einem Lufteinlass und einem Luftauslass, in welchem das Innenraumluftfilterelement (10) dichtend die Einlassseite von der Auslassseite trennt.

15. Verfahren zur Reinigung von insbesondere mit Schadgasen und/oder Aerosolen und/oder Feststoffpartikelstaub beladener Luft, insbesondere der Zuluft von Land- oder Arbeitsmaschinen, insbesondere mit Spritz- oder Sprühvorrichtungen für Pflanzenschutz- oder Düngemittel, umfassend die Schritte
a. Zuleitung der ungereinigten Luft zu einem Innenraumluftfilterelement insbesondere nach einem der Ansprüche 1 - 13;
b. Fakultativ Abscheidung von Stäuben aus Feststoffpartikeln mittels eines Vorfilterbereichs (70);
c. Abscheidung von Schadgasen mittels eines Adsorptionsfilterbereichs (50);
d. Abscheidung von Aerosolen mittels eines Feinfilterbereichs (80), insbesondere eines HEPA-Feinfilterbereichs.
